# EUROPEAN PATENT APPLICATION

(11) **EP 2 557 680 A1**
(43) Date of publication of application: **13.02.2013**
(21) Application number: 11765443.4
(22) Date of filing: 25.03.2011
(51) Int. Cl.: H02P 15/00, H02K 9/02, H02K 49/02, H02K 49/10

(54) **RETARDER CONTROL DEVICE, RETARDER CONTROL METHOD, AND VEHICLE HAVING RETARDER CONTROL DEVICE**

(30) Priority: 07.04.2010 JP 2010088632
(71) Applicant: Hino Motors Ltd., Tokyo 191-8660 (JP); Nippon Steel & Sumitomo Metal Corporation, Tokyo 100-8071 (JP)
(72) Inventor: SAWADA, Tatsuo, Hino-shi Tokyo 191-8660 (JP); TASAKA, Masahiro, Osaka-shi Osaka 541-0041 (JP); SAITO, Akira, Osaka-shi Osaka 541-0041 (JP)
(74) Representative: Schäfer, Matthias W.
(86) International application number: PCT/JP2011/057328
(87) International publication number: WO 2011/125542

(57) **Abstract**

The disclosed retarder control device aims at ECU standardization and is able to function sufficiently as a retarder auxiliary brake regardless of driving conditions. A retarder control device (1) is provided with: a retarder (2) having both an energy conversion means (3) for converting rotational energy to electric energy and a heat dissipation means (4) for converting said electrical energy to thermal energy and dissipating the heat; a temperature sensor (5) for detecting the temperature of the heat dissipation means (4); a rotation speed detection means (6) for detecting the rotation speed of the heat dissipation means (4); and a control unit (7) which, when the temperature detected by the temperature sensor (5) exceeds a prescribed threshold value, performs control such that less electrical energy is generated. The control unit (7) variably sets the prescribed threshold value in accordance with the rotation speed of the heat dissipation means (4) and performs control such that less electric energy is generated when the temperature of the heat dissipation means (4) detected by the temperature sensor (5) exceeds the prescribed threshold value corresponding to the rotation speed of the heat dissipation means (4) detected by the rotation speed detection means (6).

## Description

The present invention relates to a retarder control device, a control method for a retarder, and a vehicle having the retarder control device.

As a speed reducer for a large automobile, in addition to the foot brake which is a main brake, an exhaust brake and a retarder which are auxiliary brakes are used to constantly reduce the speed, when an automobile goes down a long slope, for example, and prevent a foot brake from burning out.

The retarder is possibly overheated in continuous use. Thus, to prevent overheat, a temperature sensor is provided on a heat dissipation means configured to dissipate the thermal energy. The retarder is controlled to stop the motion when the temperature detected by the temperature sensor has reached a predetermined temperature or more (PTL1).

Further, a retarder control device configured to control the revolution speed or the torque depending on the deviation between the target value and the control value is provided (PTL2). The retarder control device calculates the heat generation of the rotor according to the revolution speed and the torque and also calculates the dissipation amount according to the ambient temperature and the thermal capacity of the rotor to estimate the rotor temperature according to the difference between the radiation amount and the dissipation amount, and the time constant of dissipation. Further, the retarder control device outputs a compensatory signal for the temperature change of the rotor using the characteristic of the proportion between the torque and the exciting current corresponding to the rotor temperature, and also outputs a compensatory signal for the revolution speed using the characteristic of the proportion between the torque and the exciting current corresponding to the revolution speed in order to adjust the control gain based on each of the compensatory signals. This is aimed to enable an accurate determination of the torque character and obtain a constant optimal responsiveness and stability at all range of the rotor temperature and the revolution speed.

### [Citation List]

### [Patent Literature]

- PTL1:: JP 10-136636 A (Abstract)
- PTL2:: JP 08-275597 A

However, the retarder disclosed in PTL1 stops the motion when its temperature reaches a predetermined temperature. Accordingly, the retarder cannot sufficiently function as an auxiliary brake.

Further, the predetermined temperatures that stop the retarder motion vary from one specification such as car model to another. Accordingly, it is necessary to set a predetermined temperature to each specification and provide a plurality of product numbers of electric control units (ECUs).

Further, the retarder disclosed in PTL2 can determine the torque characteristic in wide ranges of the rotor temperature and the revolution speed. The retarder, however, requires a control means configured to perform very complex calculations including a calculation of the heat generation of the rotor according to the revolution speed and the torque, a calculation of the dissipation amount according to the ambient temperature and the thermal capacity of the rotor, a calculation of the rotor temperature according to the difference between the radiation amount and the dissipation amount, and the time constant of dissipation, an output of a compensatory signal for the temperature change of the rotor using the characteristic of the proportion between the torque and the exciting current corresponding to the rotor temperature, an output of a compensatory signal for the revolution speed using the characteristic of the proportion between the torque and the exciting current corresponding to the revolution speed, and an adjustment of the control gain based on each of the compensatory signals. Unlike the retarder disclosed in PTL1, the retarder cannot be applied to a control means having a simple structure controlled by a relay which closes the power circuit according to the output from the temperature sensor.

In light of the foregoing, the present invention is aimed to provide a retarder control device, a control method for a retarder, and a vehicle having the retarder control device in which the retarder can sufficiently function as an auxiliary brake by a simple control regardless of driving conditions, and which standardize ECUs.

In order to solve the problem, according to one aspect of the present invention, there is provided a retarder control device including: a retarder including an energy conversion means configured to convert a rotation energy into an electrical energy, and a heat dissipation means configured to convert the electrical energy into a thermal energy and dissipate the heat energy; a temperature detection means configured to detect a temperature of the heat dissipation means; a revolution speed detection means configured to detect a revolution speed of the heat dissipation means; and a control part configured to perform a control for decreasing a generation of the electrical energy when the temperature detected by the temperature detection means is indicated as a temperature exceeding a predetermined threshold, wherein the control part sets the predetermined threshold variable according to the revolution speed of the heat dissipation means and, when the temperature of the heat dissipation means detected by the temperature detection means exceeds the predetermined threshold corresponding to the revolution speed of the heat dissipation means detected by the revolution speed detection means, the control part performs the control for decreasing the generation of the electrical energy.

In addition, when the temperature of the heat dissipation means detected by the temperature detection means exceeds the predetermined threshold, it is desirable that the generation of the electrical energy be decreased and switchings be performed among three states: a first state having a maximum damping force; a second state having a weaker damping force as compared with the first state; and a third state where a damping force is not generated.

In addition, when the temperature of the heat dissipation means detected by the temperature detection unit exceeds the predetermined threshold, it is desirable that the generation of the electrical energy be decreased and a switching for bringing the damping force of the retarder one level down be performed.

According to one aspect of the present invention, there is provided a control method for a retarder including an energy conversion means configured to convert rotation energy into an electrical energy, and a heat dissipation means configured to convert the electrical energy into a thermal energy and dissipate the thermal energy. The method includes: detecting a temperature of the heat dissipation means by a temperature detection means; detecting a revolution speed of the heat dissipation means by a revolution speed detection means; and outputting, from the revolution speed detected by the revolution speed detection means, a threshold of a predetermined temperature corresponding to the revolution speed and, when the temperature detected by the temperature detection means exceeds the threshold, decreasing a generation of the electrical energy.

In addition, it is desirable that a vehicle have the retarder control device.

According to the present invention, the retarder can sufficiently function as an auxiliary brake by a simple control regardless of driving conditions, and ECUs can be standardized.

### {Brief Description of the Drawings}

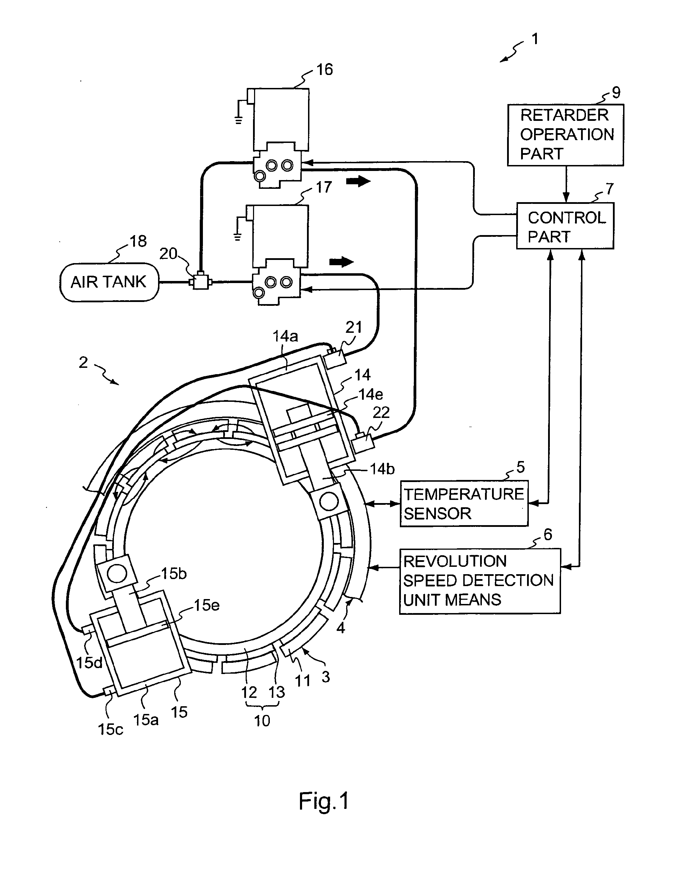

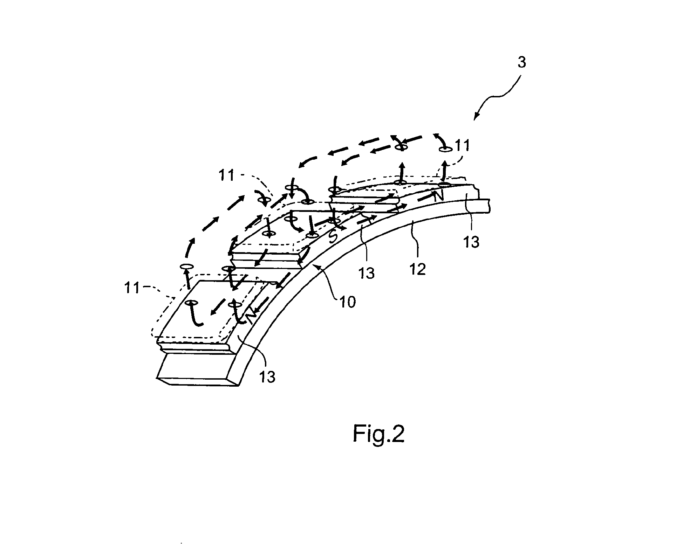

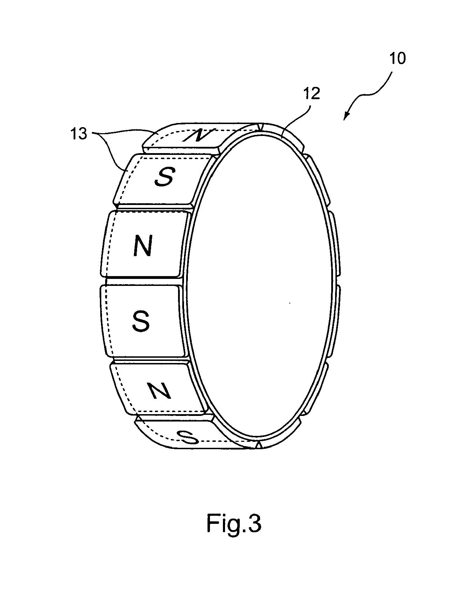

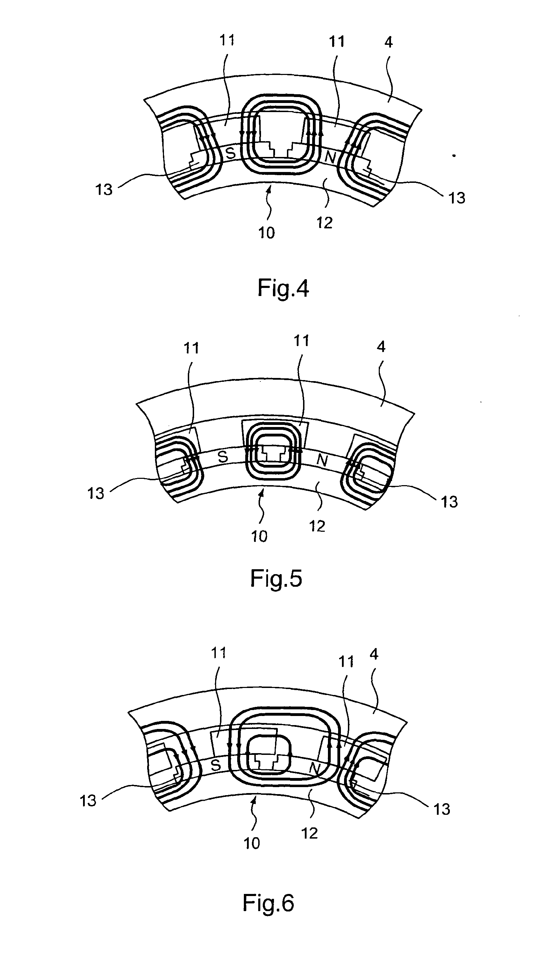

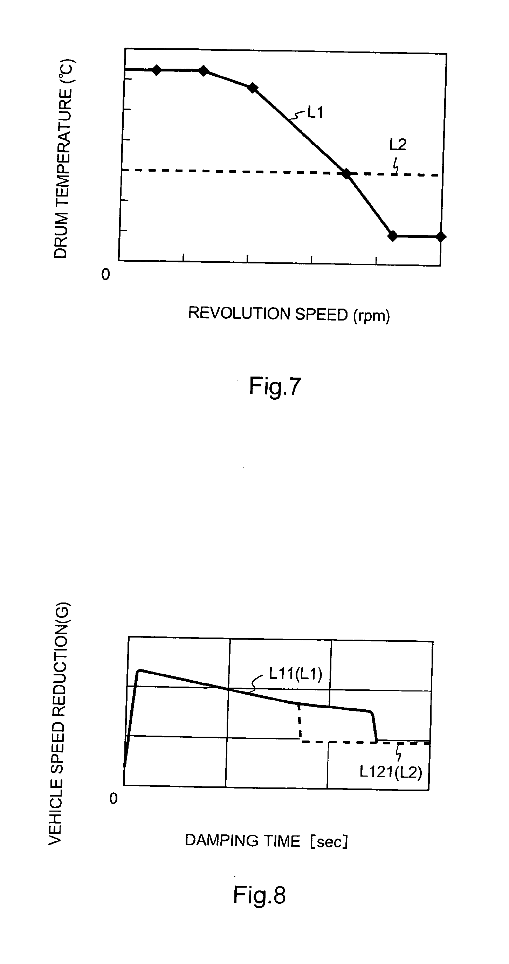

{Fig. 1} is a schematic view for showing the structure of a retarder control device according to an embodiment of the present invention.
{Fig. 2} is a perspective view for partially showing the structure of an energy conversion means in Fig. 1.
{Fig. 3} is a perspective view for showing the structure of a rotating yoke element in Fig. 1.
{Fig. 4} is a view for showing the positional relationship between the rotating yoke element and a pole piece when the retarder in Fig. 1 is at a HIGH state.
{Fig. 5} is a view for showing the positional relationship between the rotating yoke element and the pole piece when the retarder in Fig. 1 is at an OFF state.
{Fig. 6} is a view for showing the positional relationship between the rotating yoke element and the pole piece when the retarder in Fig. 1 is at a LOW state.
{Fig. 7} is a view for showing a threshold (L1) of the drum temperature and a threshold (L2) having a constant value regardless of the revolution speed of the drum which are used when the retarder is switched from the HIGH to the LOW or from the LOW to the OFF.
{Fig. 8} is a view for showing a speed reduction movement (L11) of the vehicle from the start of damping when the threshold (L1) shown in Fig. 7 is used, and a speed reduction movement (L12) of the vehicle from the start of damping when the threshold (L2) is used.

A retarder control device 1 according to an embodiment of the present invention will be described below with reference to the drawings. Note that, in the below-mentioned description, a state where a retarder 2 exerts a large damping force is denoted with HIGH, a state where the retarder 2 exerts a smaller damping force than the HIGH state is denoted with LOW, and also a state where the retarder 2 does not exert a damping force is denoted with OFF.

Fig. 1 is a schematic view for showing the structure of the retarder control device 1 according to an embodiment of the present invention. Fig. 2 is a perspective view for partially showing the structure of an energy conversion means 3 in Fig. 1. Fig. 3 is a perspective view for showing the structure of a rotating yoke element 10 in Fig. 1. Fig. 4 is a view for showing the positional relationship between the rotating yoke element 10 and a pole piece 11 when the retarder 2 in Fig. 1 is at the HIGH state. Fig. 5 is a view for showing the positional relationship between the rotating yoke element 10 and the pole piece 11 when the retarder 2 in Fig. 1 is at the OFF state. Fig. 6 is a view for showing the positional relationship between the rotating yoke element 10 and the pole piece 11 when the retarder 2 in Fig. 1 is at the LOW state.

The controller 1 of a retarder according to an embodiment of the present invention (hereinafter, referred to as a retarder control device 1) is an apparatus for controlling the motion of the retarder 2 to make the retarder 2 sufficiently exert the damping force. The retarder 2 is an example of an auxiliary brake equipped in a vehicle. The retarder control device 1 includes the retarder 2, a temperature sensor 5, a revolution speed detection means 6, a control part 7, and a retarder operation part 9. The retarder 2 includes the energy conversion means 3 and a drum 4. The energy conversion means 3 is for converting a rotation energy into an electrical energy. The drum 4 is an example of a heat dissipation means configured to convert the electrical energy into a thermal energy and dissipate the thermal energy. The temperature sensor 5 is an example of a temperature detection means which detects the temperature of the drum 4. The revolution speed detection means 6 detects the revolution speed of the drum 4. The control part 7 controls the damping force of the retarder 2 based on the detected values of the temperature and the revolution speed of the drum 4. The retarder operation part 9 is for switching the states of the retarder 2 by the operator's operation. Note that, for example, in place of the temperature sensor 5 which directly detects the temperature of the drum 4, a means which estimates the temperature of the drum 4 from the energy absorbed by the retarder 2 can be adopted as the temperature detection means. Further, a means which estimates the revolution speed of a propeller shaft from the revolution speed of the engine and the transmission gear ratio may be adopted as the revolution speed detection means 6.

As shown in Fig. 1, the drum 4 has a ring shape. The drum 4 is rotatably positioned at the outside of the energy conversion means 3. As shown in Figs 1 and 2, the energy conversion means 3 includes the rotating yoke element 10 which has an approximate ring shape, and the pole piece 11 which is positioned on the side of the circumference of the rotating yoke element 10. The rotating yoke element 10 is positioned to enable to rotate relative to the pole piece 11. As shown in Figs. 2 and 3, the rotating yoke element 10 includes a plurality of (for example, twelve) north and south poles of permanent magnets 13 and a yoke 12 which has a ring shape. The north and south poles of permanent magnets 13 are alternately positioned at the circumference of the yoke 12. When the pole piece 11 is at a position facing the permanent magnet 13 as shown in Fig. 2, a magnetic flux generated from the north pole of the permanent magnet 13 passes through the facing pole piece 11 and the drum 4 (not shown in Fig. 2), and also passes through an adjoining pole piece 11 and enters the south pole of the permanent magnet 13 as shown with an arrow in Fig. 2. In other words, eddy-shaped magnetic lines which pass through the north pole of the permanent magnet 13, the drum 4, and the south pole of the permanent magnet 13 are formed.

As shown in Fig. 1, the retarder 2 includes a first cylinder 14 and a second cylinder 15 which are for driving the rotating yoke element 10 in a circumferential direction. The first cylinder 14 and the second cylinder 15 are provided with air from an air tank 18 owing to the opening and closing of a first electromagnetic valve 16 and a second electromagnetic valve 17. Specifically, as shown in Fig. 1, the first electromagnetic valve 16 and the second electromagnetic valve 17 are coupled to the air tank 18 through a three-way valve 20. Thus, the air sent from the air tank 18 passes through the first electromagnetic valve 16 or the second electromagnetic valve 17 after passing through the three-way valve 20, and is provided to the first cylinder 14 and the second cylinder 15. On the other hand, a valve 21 is placed on the side of a bottom part 14a of the first cylinder 14. The valve 21 is coupled, through a tube, to a connection part 15c provided on the side of a bottom part 15a of the second cylinder 15. Further, a valve 22 is placed on the side where a rod 14b projects at the first cylinder 14. The valve 22 is coupled to a connection part 15d through a tube. The connection part 15d is provided on the side where a rod 15b projects at the second cylinder 15. Further, the first electromagnetic valve 16 is coupled to the valve 22 through a tube. The second electromagnetic valve 17 is coupled to the valve 21 through a tube.

Further, each of the tips of the rods 14b and 15b of the first cylinder 14 and the second cylinder 15 is connected to the rotating yoke element 10. When the air in the air tank 18 passes through the second electromagnetic valve 17 and is provided to the valve 21, the air sent to the valve 21 is provided from the side of the bottom part 14a to the inside of the first cylinder 14 and is also provided to the connection part 15c through the valve 21. Then, the air provided to the connection part 15c is provided from the side of the bottom part 15a to the inside of the second cylinder 15. Then, pistons 14e and 15e move to the sides of the rods 14b and 15b. This pushes up the rods 14b and 15b. Accordingly, the rotating yoke element 10 moves in a clockwise direction in Fig. 1. On the other hand, when the air in the air tank 18 passes through the first electromagnetic valve 16 and is provided to the valve 2 2, the air sent to the valve 22 is provided from the side of the rod 14b to the inside of the first cylinder 14 and is also provided to the connection part 15d through the valve 22. Then the pistons 14e and 15e move to the sides of the bottom parts 14a and 15a. This pushes down the rods 14b and 15b. Accordingly, the rotating yoke element 10 moves in a counterclockwise direction in Fig. 1.

Here, the rotating yoke element 10 of the retarder 2 is configured to rotate in a circumferential direction and has a rotation angle which corresponds to half the dimension of the permanent magnets 13 in a circumferential direction. Moving the rotating yoke element 10 in a circumferential direction within the rotation angle can switch the strength of the magnetic flux which passes through the drum 4, or can switch the magnetic flux not to pass through the drum 4. Switching the magnetic flux in such a manner can switch the retarder 2 which is an auxiliary brake among the three states: the HIGH which is an example of a first state; the LOW which is an example of a second state; and the OFF which is an example of a third state. The retarder 2 can be switched among the HIGH, LOW, and OFF states by the operator's operation over the retarder operation part 9, and also can be switched by the control by the control part 7.

Here, the states of the retarder 2 will be described. When the rotating yoke element 10 rotates only the above-mentioned predetermined rotation angle, and the permanent magnet 13 is maintained at a position where the whole surface of the permanent magnet 13 faces the pole piece 11 as shown in Fig. 4, a magnetic field generated from the permanent magnet 13 spreads and reaches the drum 4. While the drum 4 rotates in such a state, the drum 4 passes through the magnetic field. This generates an eddy current (inductive current) in the drum 4. The action between the eddy current generated in the drum 4 and the magnetic field generated from the permanent magnet generates an electromagnetic force. The electromagnetic force is a force preventing the drum 4 from rotating (damping force). The damping energy is converted into a thermal energy and is released into the air.

Further, when the rotating yoke element 10 rotates only the above-mentioned predetermined rotation angle, and the permanent magnet 13 is maintained at a position to straddle the pole pieces 11 as shown in Fig. 5, the magnetic field generated from the permanent magnet 13 is shielded by the pole piece 11. In other words, even though the drum 4 rotates in such a state, an eddy current (inductive current) is not generated in the drum 4. Thus, a force preventing the drum 4 from rotating (damping force) is not generated.

Further, when the rotating yoke element 10 rotates only the above-mentioned predetermined rotation angle, and the permanent magnet 13 is maintained at a position where one edge of the permanent magnet 13 covers the pole piece 11 and the other edge does not cover the pole piece 11 as shown in Fig. 6, the magnetic field generated from the permanent magnet 13 does not spread as much as that in the example shown in Fig. 4. As a result of it, the eddy current (inductive current) which is generated in the drum 4 by the rotation of the drum 4 becomes smaller than that in the example shown in Fig. 4. Thus, the force preventing the drum 4 from rotating (damping force) becomes small. On the other hand, in comparison to the example shown in Fig. 5, the force preventing the drum 4 from rotating (damping force) is generated because the eddy current (inductive current) is generated in the drum 4.

The state shown in Fig. 4 where the force preventing the drum 4 from rotating (damping force) peaks corresponds to the HIGH state. The state shown in Fig. 6 where the force preventing the drum 4 from rotating (damping force) which is weaker than that at the HIGH state is generated corresponds to the LOW state. The state shown in Fig. 5 where the force preventing the drum 4 from rotating (damping force) is not generated corresponds to the OFF state.

As described above, the three states of the retarder 2, the HIGH, the LOW, and the OFF, are switched by the operation of the retarder operation part 9 and the control of the control part 7.

The switching of the retarder 2 by the retarder operation part 9 will be described. For the switching of the retarder 2 by the retarder operation part 9, an operator manually switches the retarder operation part 9 provided on the vehicle to one of the HIGH, the LOW, and the OFF. In this case, when the operator switches the retarder operation part 9, a signal is transmitted to the control part 7. Then, the control part 7 opens or closes the first electromagnetic valve 16 and the second electromagnetic valve 17 according to the signal received from the retarder operation part 9 by the control part 7. Opening or closing the first electromagnetic valve 16 or the second electromagnetic valve 17 supplies air to the first cylinder 14 and the second cylinder 15. The rods 14b and 15b proceed or retrocede owing to the supply of the air. Further, in connection with the motions of the rods 14b and 15b, the rotating yoke element 10 moves in a circumferential direction. This causes the switching of the retarder 2.

Specifically, for example, when the operator sets the retarder operation part 9 at the LOW while the retarder is at the OFF state, the control part 7 receives a signal from the retarder operation part 9. Then, the control part 7 closes the first electromagnetic valve 16 and opens the second electromagnetic valve 17. This supplies the air from the air tank 18 to the second electromagnetic valve 17 through the three-way valve 20. Then, the air supplied to the second electromagnetic valve 17 is sent from the second electromagnetic valve 17 to the valve 21. The air sent to the valve 21 is supplied from the side of the bottom part 14a to the inside of the first cylinder 14 and is also supplied to the connection part 15c of the second cylinder 15 through the valve 21. The air supplied to the connection part 15c is supplied from the side of the bottom part 15a to the inside of the second cylinder 15. When the air is supplied from the sides of the bottom parts 14a and 15a to the insides of the first cylinder 14 and the second cylinder 15, the pistons 14e and 15e move to the direction to push up the rods 14b and 15b and the rods 14b and 15b proceed. Then, the rotating yoke element 10 moves in a clockwise direction and the retarder 2 is switched from the OFF state shown in Fig. 5 to the LOW state shown in Fig. 6. When the operator sets the retarder operation part at the HIGH, the air is supplied from the sides of the bottom parts 14a and 15 a to the insides of the first cylinder 14 and the second cylinder 15 by the same operations as described above. As a result of it, the rotating yoke element 10 moves in a clockwise direction and the retarder 2 is set at the HIGH state shown in Fig. 4.

On the other hand, for example, when the operator sets the retarder operation part 9 at the LOW while the retarder 2 is at the HIGH state, the control part 7 receives a signal from the retarder operation part 9. Then, the control part 7 opens the first electromagnetic valve 16 and closes the second electromagnetic valve 17. This supplies the air from the air tank 18 to the first electromagnetic valve 16 through the three-way valve 20. Then, the air supplied to the first electromagnetic valve 16 is sent from the first electromagnetic valve 16 to the valve 22. The air sent to the valve 22 is supplied from the side of the rod 14b to the inside of the first cylinder 14 and is also supplied to the connection part 15d of the second cylinder 15 through the valve 22. The air supplied to the connection part 15d is supplied from the side of the rod 15b to the inside of the second cylinder 15. When the air is supplied from the sides of the rods 14b and 15b to the insides of the first cylinder 14 and the second cylinder 15, the pistons 14e and 15e move in the direction to push down the rods 14b and 15b and the rods 14b and 15b retrocede. Then, the rotating yoke element 10 moves in a counterclockwise direction and the retarder 2 is switched from the HIGH state shown in Fig. 4 to the LOW state shown in Fig. 6. When the operator sets the retarder operation part at the OFF while the retarder 2 is at the LOW state, the air is supplied from the sides of the rods 14b and 15b to the insides of the first cylinder 14 and the second cylinder 15 by the same operations as described above. As a result of it, the rotating yoke element 10 moves in a counterclockwise direction and the retarder 2 is set at the OFF state shown in Fig. 5.

The switching of the retarder 2 under the control of the control part 7 will be described.

The switching of the retarder 2 under the control of the control part 7 is performed according to the temperature of the drum 4 which is detected by the temperature sensor 5, and the revolution speed of the drum 4 which is detected by the revolution speed detection unit 6. Specifically, when the detected temperature of the drum 4 exceeds a predetermined temperature (threshold) set for the detected revolution speed, the retarder 2 is switched from the HIGH to the LOW, or from the LOW to the OFF. In other words, when the temperature of the drum 4 detected by the temperature sensor 5 exceeds a predetermined threshold for the revolution speed of the drum 4 detected by the revolution speed detection means 6, the switching for bringing the damping force generated in the drum 4 one level down is performed.

Fig. 7 is a view for showing a threshold (L1) of the drum temperature and a threshold (L2) having a constant value regardless of the revolution speed of the drum 4 which are used when the retarder 2 is switched from the HIGH to the LOW or from the LOW to the OFF.

In such a manner, the threshold (L1) of the drum temperature corresponds to the revolution speed of the drum 4. In the example of Fig. 7, the threshold is set at high temperatures in a range where the revolution speed is relatively low. Further, in the setting, as the revolution speed becomes larger, the threshold decreases. Further, the threshold is set at low temperatures in a range where the revolution speed is relatively high. Further, when the revolution speed of the drum 4 is large, the temperature of the drum 4 drastically rises. Thus, the temperature keeps rising even after the switching has been performed. Accordingly, the threshold is set at a relatively low temperature in a range where the revolution speed is high to prevent the temperature of the drum 4 from being high.

For example, when the revolution speed of the drum 4 is relatively low while the retarder 2 is set at the HIGH state, the threshold is a high temperature. In other words, when the temperature of the drum 4 reaches a high temperature that is the threshold while the revolution speed of the drum 4 is relatively low, the state of the retarder 2 is switched from the HIGH to the LOW by the control of the control part 7.

For the controls, the control part 7 receives each of the detected values from the temperature sensor 5 and the revolution speed detection means 6, and compares the received detected values of the temperature and the revolution speed to the threshold of the temperature corresponding to the revolution speed as shown in Fig. 7. Specifically, when the detected temperature exceeds the threshold corresponding to the detected revolution speed as a result of the comparison, by the control part 7, between the detected value received from the temperature sensor 5 and the threshold corresponding to the revolution speed detected by the revolution speed detection means 6, a control signal is transmitted from the control part 7 to the retarder 2 (the first electromagnetic valve 16 and the second electromagnetic valve 17). The control signal is for switching the retarder 2 to bring the damping force generated in the retarder 2 one level down. In other words, a control signal for switching the retarder 2 from the HIGH to the LOW, or from the LOW to the OFF is transmitted.

Specifically, the control part 7 transmits, to the first electromagnetic valve 16, a control signal for opening the first electromagnetic valve 16. Then, the first electromagnetic valve 16 opens and the air in the air tank 18 is supplied to the valve 22 through the three-way valve 20 and the first electromagnetic valve 16 as described above. The air supplied to the valve 22 is supplied from the side of the rod 14b to the inside of the first cylinder 14, and is also supplied from the side of the rod 15b to the inside of the second cylinder 15 through the connection part 15d. Then, the pistons 14e and 15e move in the direction to push down the rods 14b and 15b and the rods 14b and 15b retrocede. After that, the rotating yoke element 10 moves in a counterclockwise direction. For example, when being at the HIGH state, the retarder 2 is switched from the HIGH state shown in Fig. 4 to the LOW state shown in Fig. 6 , in other words, the retarder 2 is switched to bring the damping force generated in the retarder 2 one level down.

In the retarder controller 1 constructed as described above, the temperature (threshold) for switching the retarder 2 is variable according to the revolution speed so that the retarder 2 can appropriately be controlled for each running condition.

When the revolution speed of the drum 4 is low, the rise velocity of the temperature of the drum 4 is slow. Thus, the drum 4 does not reach the limit temperature even though the threshold is set at a high temperature in consideration of the rise velocity and, when the temperature of the drum 4 reaches the threshold, the state of the retarder 2 is lowered to the LOW or the OFF. Accordingly, when the revolution speed of the drum 4 is relatively low, the threshold is set at a high temperature as the thresholds (L1) shown in Fig. 7 so that a strong damping force can act safely for a long time. As a result of it, the speed reduction performance of the retarder 2 can be enhanced. Further, such a temperature control by the threshold can be applied to such a simple control means configured to close the power circuit according to the output from the temperature sensor as the retarder disclosed in PTL1, for example.

Fig. 8 is a view for showing a speed reduction movement (L11) of the vehicle from the start of damping when the threshold (L1) shown in Fig. 7 is used, and a speed reduction movement (L12) of the vehicle from the start of damping when the threshold (L2) is used.

When the revolution speed of the drum 4 is low, the temperature of the drum 4 does not reach the limit temperature even though the state of the retarder 4 is lowered to the LOW or the OFF at a time when the temperature of the drum 4 reaches the threshold. On the other hand, when the threshold (L2) is used, the state is switched to the LOW or the OFF at a time when the temperature of the drum 4 reaches a relatively low temperature. In other words, as shown in Fig. 8, when the threshold (L2) is used, the speed reduction performance of the retarder 2 is inferior as compared with that when the threshold (L1) is used. In the example shown in Fig. 8, in the speed reduction movement (L12), the state of the retarder 4 is switched to the LOW or the OFF after a relatively short time has elapsed since the damping has been started. On the other hand, in the speed reduction movement (L11), the state of the retarder 4 is kept at the HIGH or the LOW until a relatively long time has elapsed since the damping has been started.

When the revolution speed of the drum 4 is relatively high, the rise velocity of the temperature of the drum 4 is fast. Thus, if the threshold is not set at a low temperature in consideration of the rise velocity, the drum 4 will not be prevented from reaching the limit temperature. Accordingly, as the threshold (L1) shown in Fig. 7, when the revolution speed of the drum 4 is relatively high, setting the threshold at a low temperature can prevent the drum 4 from having a high temperature. As a result of it, the life of the retarder 2 can be extended.

When the revolution speed of the drum 4 is relatively high while the threshold (L2) is used, the drum 4 has a higher temperature. This decreases the damping force or damages the retarder 2 easily.

Further, when the revolution speed of the drum 4 is relatively low, keeping the damping time long can efficiently convert the damping energy into a thermal energy. This can enhance energy absorption from the retarder 2.

Further, in the retarder controller 1, the temperature (threshold) for switching the retarder 2 is set variable according to the revolution speed. Thus, unlike the threshold (L2) having a constant temperature for switching, it is not necessary to set a temperature for switching for each specification such as car model. This makes possible to standardize ECUs. As a result of it, the set product numbers of ECUs can be reduced.

An embodiment of the present invention has been described above. The present invention, however, is not limited to the above-mentioned embodiment of the present invention, and is practicable in various modified embodiments.

In the above-mentioned embodiment, when the rotating yoke element 10 moves in a clockwise direction, the switching for bringing the damping force of the retarder 2 one level up is performed, and also when the rotating yoke element 10 moves in a counterclockwise direction, the switching for bringing the damping force of the retarder 2 one level down is performed. Besides such an embodiment, for example, when the rotating yoke element 10 moves in a counterclockwise direction, the switching for bringing the damping force of the retarder 2 one level up can be performed, and also when the rotating yoke element 10 moves in a clockwise direction, the switching for bringing the damping force of the retarder 2 one level down can be performed. Further, moving the rotating yoke element 10 in a clockwise direction can perform the switching among the three states, the HIGH, the LOW, and the OFF.

Further, although the temperature (threshold) for switching the retarder 2 according to the revolution speed is shown in Fig. 7 as the above-mentioned embodiment, the threshold is not limited to the threshold shown in Fig. 7 and can differ from the threshold shown in Fig. 7.

Further, in the above-mentioned embodiment, both of the first electromagnetic valve 16 and the second electromagnetic valve 17 only pump air into the first cylinder 14 and the second cylinder 15. However, the first electromagnetic valve 16 and the second electromagnetic valve 17 not only pump air into the first cylinder 14 and the second cylinder 15 but also can aspirate the air from the first cylinder 14 and the second cylinder 15 and return the air to the air tank 18.

Further, in the retarder control device 1, the process in the control part 7 is performed by hardware. However, the process in the control part 7 can be performed by software. Specifically, a function of a program can control the retarder 2.

Further, the threshold (L1) shown in Fig. 7 is used for both of the switchings from the HIGH to the LOW and from the LOW to the OFF. However, the threshold (L1) shown in Fig. 7 can be used for only one of the switchings from the HIGH to the LOW and from the LOW to the OFF and another threshold can be used for the other switching.

Further, in the above-mentioned embodiment, a permanent magnetic retarder is adopted as the retarder 2. However, a retarder having another driving pattern such as an electromagnetic retarder or a hydraulic retarder can be adopted as the retarder 2.

### Reference Signs List

- 1:: retarder control device
- 2:: retarder
- 3:: energy conversion means
- 4:: drum (radiation means)
- 5:: temperature sensor (temperature detection means)
- 6:: revolution speed detection means
- 7:: control part

## Claims

1. A retarder control device comprising:
a retarder including an energy conversion means configured to convert a rotation energy into an electrical energy, and a heat dissipation means configured to convert the electrical energy into a thermal energy and dissipate the thermal energy;
a temperature detection means configured to detect a temperature of the heat dissipation means;
a revolution speed detection means configured to detect a revolution speed of the heat dissipation means; and
a control part configured to perform a control for decreasing a generation of the electrical energy when the temperature detected by the temperature detection unit is indicated as a temperature exceeding a predetermined threshold,
wherein the control part sets the predetermined threshold variable according to the revolution speed of the heat dissipation means and, when the temperature of the radiation unit detected by the temperature detection means unit exceeds the predetermined threshold corresponding to the revolution speed of the heat dissipation means detected by the revolution speed detection means, the control part performs the control for decreasing the generation of the electrical energy.

2. The retarder control device according to claim 1,
wherein, when the temperature of the heat dissipation means detected by the temperature detection means exceeds the predetermined threshold, the generation of the electrical energy is decreased and switchings are performed among three states: a first state having a maximum damping force; a second state having a weaker damping force as compared with the first state; and a third state where a damping force is not generated.

3. The retarder control device according to claim 2,
wherein, when the temperature of the heat dissipation means detected by the temperature detection means exceeds the predetermined threshold, the generation of the electrical energy is decreased and a switching for bringing the damping force of the retarder one level down is performed.

4. A control method for a retarder including an energy conversion means configured to convert a rotation energy into an electrical energy, and a heat dissipation means configured to convert the electrical energy into a thermal energy and release the thermal energy, the method comprising:
detecting a temperature of the heat dissipation means by a temperature detection means unit;
detecting a revolution speed of the heat dissipation means by a revolution speed detection unit; and
outputting a threshold of a predetermined temperature corresponding to the revolution speed detected by the revolution speed detection means and, when the temperature detected by the temperature detection means exceeds the threshold, decreasing a generation of the electrical energy.

5. A vehicle comprising the retarder control device according to any one of claims 1 to 3.
